**Europäisches Patentamt**

**European Patent Office**

**Office européen des brevets**

(19)

(11) Veröffentlichungsnummer: **0 183 868**
**B1**

(12) # EUROPÄISCHE PATENTSCHRIFT

(45) Veröffentlichungstag der Patentschrift:
**29.03.89**

(51) Int. Cl.⁴: **A 01 B 63/111**

(21) Anmeldenummer: **84114866.1**

(22) Anmeldetag: **06.12.84**

(54) Landwirtschaftliches Bodenbearbeitungsgerät.

(43) Veröffentlichungstag der Anmeldung:
**11.06.86 Patentblatt 86/24**

(45) Bekanntmachung des Hinweises auf die Patenterteilung:
**29.03.89 Patentblatt 89/13**

(84) Benannte Vertragsstaaten:
**AT BE CH DE FR GB IT LI LU NL SE**

(56) Entgegenhaltungen:
**DE-A-2 701 117**
**DE-A-3 127 070**
**DE-C-3 237 538**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 Postfach 3055, D-8500 Nürnberg (DE)**

**Beschreibung**

Die Erfindung betrifft ein landwirtschaftliches Bodenbearbeitungsgerät, z. B. Drillmaschinen, Kreiseleggen, Bodenfräsen o. dgl., mit einer zur Einstellung der Arbeitsiefe der Werkzeuge des Bodenbearbeitungsgerätes vorgesehenen Bodenniveauabfühlung durch ein den Boden berührendes mechanisches Bodenabtastglied, das mit einem in etwa vertikal beweglich geführten elektrischen Geber zum Verschieben des Gebers in vertikaler Richtung in Abhängigkeit vom abgetasteten Bodenniveau verbunden ist.

Ein Landwirtschaftliches Bodenbearbeitungsgerät dieser Art ist beispielsweise aus der DE-PS-3 237 538 bekannt. Bei dem bekannten Landwirtschaftlichen Bodenbearbeitungsgerät ist das Bodenabtastglied ein an einem Schwingarm gelagertes Abtastrad, dessen Bewegung in vertikaler Richtung mit Hilfe eines Stoßdämpfers gedämpft wird. Das ist eine verhältnismäßig aufwendige Konstruktion Abgesehen davon kann der Schwingarm in seitlicher Richtung nicht auslenken. Bodenhindernisse, die sich dem Bodenabtastglied in den Weg stellen, wie z. B. Steine und dgl., können also vom Bodenabtastrad nicht seitlich umfahren werden. Das Bodenabtastglied muß also über jedes kleine Hindernis hinüberklettern. Entsprechend diesen aufeinanderfolgenden Auf- und Abbewegungen des Abtastrades wird über den elektrischen Geber dann auch eine elektrische Schwingungskurve erzeugt, die selbst nicht geeignet ist, zum Einstellen der Arbeitstiefe der Bodenbearbeitungswerkzeuge zu dienen, wenn nicht weitere Maßnahmen getroffen werden. Außerdem können Tasträder ihren Umfang durch wickelnde Erde aufbauen. Falls in sich starre Gleitkufen verwendet werden, so ergibt sich das Problem, daß diese dann zum Überspringen von Bodenunebenheiten bei schneller Fahrt neigen.

Mit der vorliegenden Erfindung soll nun ein Bodenbearbeitungsgerät der eingangs genannten Art derart ausgebildet werden, daß vertikale Schwingungen des Bodenabtastgliedes weitgehendst vermieden werden.

Diese Aufgabe wird erfindungsgemäß dadurch gelöst, daß das Bodenabtastglied ein allseits nachgiebiges längliches Element ist, das über einen Großteil seiner Länge auf dem Boden aufliegt und in seinem auf dem Boden aufliegenden Bereich mit dem elektrischen Geber verbunden ist. Insbesondere können auch ein flexibler Schlauch oder aber eine Kette oder ein Seil als Bodenabtastglied dienen.

Bei der erfindungsgemäßen landwirtschaftlichen Bodenbearbeitungsmaschine kann das Bodenabtasglied aufgrund seiner allseitigen Nachgiebigkeit Hindernissen auf dem Boden leicht seitlich ausweiche, so daß es viel weniger zu einem Schwingen in vertikaler Richtung neigt, wie das beim Stand der Technik der Fall ist. Dabei wird es durch den Zug in Fahrtrichtung automatisch immer in seine Ausgangslage zurückkehren. Sollte ein flexibler Schlauch als Bodenabtastglied verwendet werden, so wird dieser in seine Ausgangslage bereits aufgrund seiner Federkraft zurückkehren. Bei genügend langer Auflage wird sich die Eigenmasse eines flexiblen Bodenabtastgliedes immer gleichmäßig über die Auflagefläche verteilen. Die durchgängige Nachgiebigkeit vermeidet Überbelastungsstellen wie sie beim Nachziehen von starren Gleitkörpern durch Verkanten leicht auftreten. Diese Anpassung vermindert überhöhte Reibung und Einsägen des Bodens.

Auch sorgt die flexible Beweglichkeit des Bodenabtastgliedes für einen ausreichenden Selbstreinigungseffekt und Schutz gegen das Verschmieren und Auftragen von Erde. Die Sohlenfläche und die Bodenoberfläche fallen deshalb in engen Toleranzen immer in einer Ebene zusammen.

Ferner ist leicht einzusehen, daß das Bodenabtastglied nach der Erfindung viel einfacher an der Maschine befestigt werden kann als der in Vertikalrichtung schwenkbar gelagerte Schwingarm nach dem Stand der Technik. Auch ist es offensichtlich, daß insgesamt die Abtasteinrichtung nach der Erfindung wesentlich einfacher und damit billiger ist als die nach dem Stand der Technik. Mit der Erfindung werden also einerseits funktionelle Vorteile erzielt und wird andererseits die Herstellung des Gerätes wesentlich vereinfacht. Schließlich soll nicht unerwähnt bleiben, daß auch die Zuverlässigkeit bei der Einstellung der Arbeitstiefe der Werkzeuge beim erfindungsgemäßen Gerät aufgrund der einfacheren technischen Mittel größer als beim Gerät nach dem Stand der Technik ist.

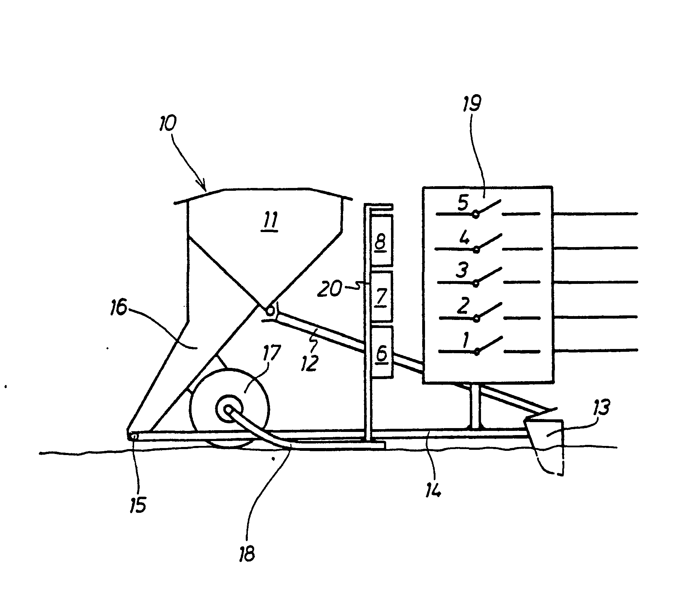

Weitere Vorteile, Einzelheiten und Merkmale ergeben sich aus der nachstehenden, anhand der beiliegenden Zeichnung erfolgenden Beschreibung eines Ausführungsbeispiels.

Die in der Zeichnung schematisch von der Seite gezeigte Grillmaschine 10 weist einen Saatkasten 11 auf, von dessen Boden sich zahlreiche teleskopierbare Saatrohre 12 nach unten erstrecken, die jeweils in ein Schar 13 münden. Zwischen den Auslaßöffnungen im Boden des Saatkastens 11 und den oberen Enden der Saatrohre 12 ist eine übliche Dosiereinrichtung angeordnet. Jedes Schar ist am einen Ende von Schararmen 14 befestigt, die mit ihren anderen Enden auf eine Achse 15 in vertikalen Ebenen schwenkbar gelagert sind. Die Achse 15 erstreckt sich horizontal zwischen den unteren Enden von Maschinenrahmenteilen 16 quer über die Drillmaschine 10. Diese Maschinenrahmenteile 16 tragen auch den Saatkasten 11 sowie die Laufräder 17 der Drillmaschine 10.

Es ist eine Bodenniveauabfühlung zur Einstellung der Arbeitstiefe der Schare 13 vorgesehen, die in dem vorliegenden Beispiel einen flexiblen Schlauch 18 umfaßt, der im Bereich der Achse des Laufrades 17 am Maschinenrahmen 16 der Drillmaschine derart befestigt ist, daß er wie gezeigt federnd auf den Boden gedrückt wird, wobei er sich entgegengesetzt zur Fahrtrichtung von der Achse des Laufrades 17 wegerstreckt. Mit dem Schlauch ist in seinem auf dein Boden aufliegenden Bereich ein elektrischer Geber 20 verbunden, der eine Reihe von Permanentmagneten 6, 7, 8 aufweist. Mit dem Geber 20 wirken elektrische Schalter 1 bis 5 zusammen, die in einem am Schararm 14 befestigten Gehäuse 19 untergebracht sind. Die elektrischen Schalter 1 bis 5 können aus sogenannten Reedschaltern bestehen, die durch die Permanentmagnete berührungslos betätigt werden können, wenn eine Relativbewegung zwischen dem betreffenden Schararm 14 und dem Schlauch 10 stattfindet. Die Anordnung der elektrischen Schalter 1 bis 5 und der Permanentmagnete 6 bis 8 muß so getroffen sein, daß zu jedem Zeitpunkt nicht nur der der aktuellen Höhe des Bodenabtastgliedes 18 entsprechende elektrische Schalter, sondern auch alle anderen elektrischen Schalter geschlossen sind, die repräsentativ für die unter dem aktuellen Niveau des Bodenabtastgliedes liegenden tieferen Werte sind. Während der Säarbeit findet fortlaufend eine Relativbewegung zwischen die die elektrischen Schalter 1 bis 5 tragenden Schararmen und dem die Permanentmagnete tragenden Schlauch 10 statt, und zwar in Abhängigkeit von den jeweiligen Bodenunebenheiten. Im Verlauf dieser Relativbewegungen betätigen die Permanentmagnete 6 bis 8 die elektrischen Schalter 1 bis 5 fortlaufend von oben nach unten und umgekehrt entsprechend den Auf- und Abbewegungen des Abtastgliedes 18. Dabei bleibt der elektrische Schalter 1, der den untersten Punkten zugeordnet ist, in der Regel am längsten geschlossen, während die übrigen elektrischen Schalter je nach ihrem Einbauniveau mehr oder weniger lang geöffnet und geschlossen werden.

Dadurch, daß der Schlauch allseits nachgiebig ist, können Bodenhindernisse seitlich leicht umgangen werden, wodurch ein elektrisches Schwingverhalten weitgehend vermieden wird.

An die Stelle des flexiblen Schlauches kann auch eine Kette oder ein Seil treten, das ebenfalls Bodenhindernissen seitlich ausweichen kann.

## Patentansprüche

1. Landwirtschaftliches Bodenbearbeitungsgerät, z. B. Drillmaschinen, Kreiseleggen, Bodenfräsen o. dgl., mit einer zur Einstellung der Arbeitstiefe der Werkzeuge des Bodenbearbeitungsgerätes vorgesehenen Bodenniveauabfühlung durch ein den Boden berührendes mechanisches Bodenabtastglied (18), das mit einem in etwa vertikal beweglich geführten Geber (20) zum Verschieben des Gebers in vertikaler Richtung in Abhängigkeit vom abgetasteten Bodenniveau verbunden ist, dadurch gekennzeichnet, daß das Bodenabtastglied (18) ein allseits nachgiebiges längliches Element ist, das über einen Großteil seiner Länge auf dem Boden aufliegt und in seinem auf dem Boden aufliegenden Bereich mit dem elektrischen Geber (20) verbunden ist.

2. Bodenbearbeitungsgerät nach Anspruch 1, dadurch gekennzeichnet, daß das Bodenabtastglied (18) ein flexibler Schlauch ist.

3. Bodenbearbeitungsgerät nach Anspruch 1, dadurch gekennzeichnet, daß das Bodenabtastglied (18) eine Kette oder ein Seil ist.

## Claims

1. An agricultural ground tilling appliance, for example, drill machines, rotary harrows, rotary cultivators or similar, with ground level tracking provided for setting the working depth of the tools of the ground tilling appliance by means of a mechanical ground feeler element (18) touching the ground, connected to an indicator (20) carried movably, approximately vertically, for displacement of the indicator in the vertical direction in accordance with the tracked ground level characterised in that the ground feeler element (18) is an elongate element yielding in all directions, which lies on the ground over a large part of its length, and which is connected to the electric indicator (20) in its zone lying on the ground.

2. A ground tilling appliance according to claim 1, characterised in that the ground feeler element (18) is a flexible hose.

3. A ground tilling appliance according to claim 1, characterised in that the ground feeler element (18) is a chain or a rope.

## Revendications

1. Appareil agricole de travail de la terre, tel qu'un semoir en ligne, une herse circulaire, une fraiseuse de labour ou équivalent, comprenant un palpeur de niveau du sol destiné au réglage de la profondeur de travail de l'outil dudit appareil de travail de la terre, par le biais d'un élément palpeur (18) en contact avec le sol et relié à un dispositif de transmission (20) mobile en translation verticale en fonction du niveau du sol palpé, caractérisé en ce que l'élément palpeur (18) est de forme allongée, flexible sur son ensemble, reposant sur le sol sur une grande partie de sa longueur et relié à l'appareil de transmission (20) électrique pour cette zone.

2. Appareil agricole de travail de la terre selon la revendication 1, caractérisé en ce que l'élément palpeur (18) est un tuyau souple.

3. Appareil agricole de travail de la terre selon la revendication 1, caractérisé en ce que l'élément palpeur (18) est constitué par une corde ou une chaîne.